Europäisches Patentamt

(19) European Patent Office

Office européen des brevets

(11) Numéro de publication: **0 015 794**
**B1**

(12) **FASCICULE DE BREVET EUROPEEN**

(45) Date de publication du fascicule du brevet:
30.05.84

(21) Numéro de dépôt: **80400197.2**

(22) Date de dépôt: **08.02.80**

(51) Int. Cl.³: **C 03 B 1/00,** C 03 C 3/04,
C 03 C 3/10, C 09 C 1/28

(54) **Procédé d'obtention d'une composition verrière à base de silicates métalliques présentant un bas point de fusion et des caractéristiques d'affinage améliorées.**

(30) Priorité: 22.02.79 FR 7904536
06.06.79 FR 7914408
18.09.79 FR 7923176

(43) Date de publication de la demande:
17.09.80 Bulletin 80/19

(45) Mention de la délivrance du brevet:
30.05.84 Bulletin 84/22

(84) Etats contractants désignés:
**AT BE CH DE FR GB IT LU NL SE**

(56) Documents cités:
**DE - B - 1 117 553
FR - A - 844 113
GB - A - 855 014
US - A - 2 640 756
US - A - 2 929 693
US - A - 3 065 089
US - A - 3 472 787
US - A - 4 029 736
US - A - 4 054 459**

(73) Titulaire: **RHONE-POULENC CHIMIE DE BASE, 25, quai Paul Doumer, F-92408 Courbevoie (FR)**

(72) Inventeur: **Richard, Christian, 28, avenue du Général Leclerc, F-58500 Clamecy (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

# Description

La présente invention a pour objet un procédé d'obtention d'une composition verrière à base de silicates métalliques présentant un bas point de fusion et des caractéristiques d'affinage améliorées.

On sait que pour fabriquer un verre, on fait généralement appel à divers composés. Le silicium, le bore, l'aluminium et le phosphore sous forme oxyde, sont définis comme des éléments formateurs du réseau. Leurs teneurs sont quelquefois limitées par les difficultés que l'on rencontré pour obtenir une fusion, un affinage et une homogénéisation dans de bonnes conductions.

Aussi introduit-on des éléments fondants: le lithium, le sodium et le potassium, toujours sous forme oxyde jouent ce rôle. Mais, cette addition donne aux verres des propriétés non satisfaisantes pour l'emploi auquel ils sont destinés. L'ajout d'autres oxydes est nécessaire pour améliorer certaines propriétés: la résistance chimique est amenée par l'oxyde de calcium, l'indice de réfraction par le baryum ou le plomb, l'oxyde de zinc donne du brillant.

Enfin, à cec composés sont encore ajoutés d'autres oxydes pour divers usages. Les oxydes d'arsenic, d'antimoine, de cérium et d'autres terres rares facilitent les opérations d'affinage. Des sels tels que les nitrates et sulfates sont introduits pour oxyder. L'addition de métaux lourds permet une décoloration.

Tous les constituants des verres sont la plupart du temps introduits sous des formes diverses. La silice vient du sable, les fondants sont des carbonates les autres se trouvent souvent à l'état naturel.

Ainsi la composition peut être décrite comme un mélange purement physique de matériaux choisis sous un état dicté par des raisons notamment économiques.

Ces constituants sont apportés par un mélange de diverses matières les renfermant.

On peut dans le cas du verre pur de silice faire appel à du quartz, mais la température de fusion de celui-ci qui est de l'ordre de 1800°C pose des problèmes importants de fabrication.

Aussi, dans les cas les plus courants on fait appel comme matériau de départ à du sable auquel on ajoute selon le cas divers composés minéraux comme le feldspath, le carbonate et le sulfate de sodium, le calcaire et la dolomie, le minium, le borate de soude etc...

Ce mélange est malaxé, et est porté progressivement à une température qui est couramment de 1500°C de manière à le fondre et le combiner pour former le verre. La masse en fusion contenant de nombreuses bulles, on procède à une opération dite d'affinage pour les éliminer et on fait se reposer le verre à une température telle qu'il soit amené à un degré de viscosité comptabile avec la mise en forme des objets que l'on désire obtenir. C'est la braise.

De nombreux travaux ont porté sur la fusion des mélanges vitrifiables. On a même proposé d'agglomérer des matières vitrifiables de manière à permettre de soumettre les matières à un préchauffage avant la fusion proprement dite (FR-A 2281902), mais jusqu'à ce jour à la connaissance de la demanderesse on n'a pas remis en cause la forme même de la composition vitrifiable et sa structure.

On sait par aillerus que le terme de silicate de plomb recouvre plusieurs composés de composition chimiques différentes et variant par leur rapport $SiO_2/PbO$.

Bien que l'étude de ces sels soit déjà ancienne, il s'agissait en fait de rapport molaire $SiO_2/PbO$ peu élevé.

Ainsi, plusieurs silicates hasiques de plomb ont été notamment signalés par Mostowitsch dès 1907 dans Métallurgie Halle a S t 4 p. 649-53 selon Louis Cloutier Annales de Chimie 1933 t 19 p. 41. Mais de tels silicates étaient obtenus par fusion de mélanges variables de PbO et de $SiO_2$.

Dans cet article Louis Cloutier a exposé la manière de les obtenir par précipitation à partir de solution de nitrate de plomb et de silicate $SiO_3Na_2$. Cependant, le seul composé défini obtenu répond à la formule 3 PbO, 2 $SiO_2$, les autres silicates étant selon l'auteur à considérer plutôt comme des mélanges définis, que comme des composés bien définis. On a toutefois signalé depuis, la possibilité d'obtenir un composé de formule voisine de PbO, 2 $SiO_2$ par précipitation de solutions de silicate de Na et d'une solution à 20% en Pb $(NO_3)_2$ (C. A. 52 – 145 g) mais selon ce procédé un excès de sel de plomb amène un accroissement de cristaux de Pb (OH) $NO_3$.

On a aussi déjà écrit depuis longtemps un procédé d'obtention de silicate de plomb à partir d'une solution d'acétate de plomb et de silicate dans l'US 1895910. Un tel produit est préconisé comme charge dans une composition pour élastomère. Mais dans les cas cités il s'agit d'un silicate de rapport molaire peu élevé, inférieur à deux.

Dans le FR 1187368 on a bien menitonné la possibilité d'avoir un pigment de 0,75 à 7,5 molécules de $SiO_2$ par molécule de PbO, mais il s'agit d'un pigment composé de phosphate de plomb et de silicate de plomb contenant PbO, $P_2O_5$ et $SiO_2$ sous forme de combinaison chimico-physique.

Dans le GB-A- 855014, on a décrit un procédé de préparation de silicates de métaux alcalino-terreux, par exemple le silicate de calcium, ayant un rapport molaire $SiO_2/CaO$, de préférence compris entre 2,5 et 4,5, par réaction en milieu aqueux d'un sel de métal alcalino-terreux soluble dans l'eau avec un silicate alcalin tel que le silicate de Na, le milieu contenant un excès de sel de métal alcalino-terreux par rapport à la quantité stoechiométrique nécessaire.

Les US-A- 2929693 et US-A- 3472787 décrivent respectivement un silicate de calcium et un silicate de nickel amorphes, de rapport molaire $SiO_2/CaO$ et $SiO_2/NiO$ égal à 3,3, préparés par réaction en solution aquese de silicate de sodium avec un excès de $CaCl_2$ ou $NiCl_2$ par rapport à la stoechiométrie.

Par ailleurs, il est connu de fabriquer des verres ou des compositions vitrifiables à partir des silicates de haut module tels que PbO. 3SiO$_2$; CaO. 3 SiO$_2$; MgO. 3SiO$_2$ d'après l'US-A- 4029736 et des verres ou des compositions vitrifiables à bas point de fusion à partir de mélanges de silicates alcalins, de silicates de Ca, de Mg ou de Pb avec addition éventuelle de borax, le silicate de Mg pouvant être MgO.3 SiO$_2$ selon l'US 3065089.

Enfin, l'US-A- 4054459 divulgue la préparation d'une composition verrière par réaction d'une solution de trisilicate de sodium avec l'hydroxyde ou l'oxyde d'un métal bivalent ou trivalent, le mélange du silicate de métal ainsi précipité étant mélangé avec une autre partie de la solution de trisilicate initiale, les proportions de trisilicate de sodium et de silicate de métal bivalent ou trivalent utilisés dans l'étape de mélange étant déterminés en fonction de la composition verrière désirée.

On a maintenant trouvé un procédé d'obtention d'une composition verrière à base de silicates métalliques présentant un bas point de fusion et des caractéristiques d'affinage améliorées selon lequel:

a) on forme un silicate de métal alcalin ou d'ammonium, de rapport molaire SiO$_2$/oxyde de métal alcalin supérieur ou égal à 2;

b) on forme un sel soluble d'au moins un oxyde métallique MeO du groupe Pb, Ca, Ba, Zn, Mg;

c) on fait réagir le silicate de métal alcalin et le sel obtenu à l'étape b de manière à précipiter un silicate métallique d'un métal du groupe Pb, Ca, Ba, Zn, Mg;

d) on met en suspension le silicate ainsi obtenu à l'étape c dans une solution de silicate de métal alcalin;

e) on sèche;

caractériseé par le fait que les rapports molaires SiO$_2$/MeO et SiO$_2$/oxyde de métal alcalin des silicates utilisés dans l'étape d sont les mêmes et la silice de la composition verrière est amenée uniquement sous forme de silicate des métaux Me et alcalins.

Ainsi, le procédé selon l'invention consiste à amener la silice sous forme soluble en faisant réagir une solution d'un silicate alcalin soluble et une solution d'un sel soluble, du métal dont on veut préparer le silicate, de manière à aubstituer au moins une partie de l'oxyde alcalin de silicate dans le silicate de départ. Comme précédemment le métal est notamment constitué par du plomb ou un alcalino-terreux, c'est-à-dire de valence au moins égale à deux.

Le sel du métal de substitution est amené de telle façon que l'on évite la formation de silice.

Ainsi dans le cas du plomb on fait réagir une solution d'un silicate alcalin soluble et une solution d'un sel soluble de plomb (métal de substitution), en amenant un excès de sel de plomb par rapport à la quantité stoechiométriquement nécessaire, ou tout autre moyen équivalent. Selon une forme de mise en oeuvre avantageuse de l'invention, on amène un excès du sel de plomb par rapport au silicate stoechiométriquement nécessaire et après formation du silicate de plomb, on sépare les sous produits qui sont l'excès de sel de plomb et le sel alcalin, et on recycle les eaux mères, ou les eaux de lavage qui renferment ces sels.

C'est pourquoi de manière simple on commence par former un fond de cuve avec le sel de plomb et on ajoute ensuite du silicate et éventuellement un sel de plomb de manière à avoir un excès de sel de plomb dans le milieu de la réaction. L'on effectue une filtration et les eaux mères ou les eaux de lavage qui renferment l'excès de sel de plomb et de sel alcalin en solution, sont recyclées.

Par ailleurs, la quantité maximale de l'excès de sel de plomb est déterminée par la limite de saturation, mais on a intérêt à réduire cet excès si l'on veut éviter une contamination du produit final par du sel de plomb précipité.

Le métal de substitution peut être amené par un sel soluble organique, tel qu'acétate, ou minéral mais de manière avantageuse on fait appel à du nitrate de plomb, lequel peut être fabriqué par attaque du plomb par l'acide nitrique, ou qui peut être obtenu par double décomposition.

Dans le cas de l'attaque de plomb par l'acide nitrique, le recyclage des eaux mères ou des eaux de lavage provenant de la fabrication du silicate de plomb peut être effectué au niveau de l'attaque du plomb par l'acide nitrique. On pense que la présence de nitrate de potassium favorise l'attaque du plomb.

Le silicate est notamment du groupe sodium, potassium et ammonium quaternaire et d'un rapport molaire élevé égal à celui du silicate de plomb que l'on veut obtenir.

On peut selon l'invention apporter un silicate double de sodium et de potassium.

Selon la présente invention, la concentration en réactifs n'est limitée que par la saturation en ces réactifs dans le milieu à température donnée.

La réaction de formation de silicate de plomb peut être effectuée à température ambiante.

Dans le cas où l'on recycle les eaux mères, on a toutefois intérêt à se situer à une température plus élevée afin de stabiliser la concentration en sels des eaux mères ou les eaux de lavage au cours de la précipitation du nitrate de plomb.

Le produit obtenu après séparation des eaux mères ou de lavage est lavé de manière simple à l'eau et est séché par exemple à l'étuve à 110° C.

Le silicate de plomb otenu peut d'une manière générale, être utilisé comme produit de substitution aux oxydes de plomb, en particulier en raison de sa moindre toxicité, de sa faible volatilité, sa faible solubilité et sa faible densité dans l'eau. On peut aussi l'introduire comme charge renforçante dans les matériaux élastomériques, on en général comme pigment.

Mais il a été démontré un comportement tout à fait surprenant lorsqu'on le met en oeuvre dans les compositions vitrifiables notamment pour la verreric.

En effet, contrairement à ce qui se passe dans les procédés de l'art antérieur, où la forme de l'oxyde formateur est imposé par la forme de l'oxyde de départ (sable ou quartz dans le cas de la silice) l'on s'est aperçu qu'il était possible d'intervenir de manière simple et contrôlée sur le réseau de la composition vitrifiable de départ.

Selon l'invention on amène l'élément formateur en solution par l'intermédiaire de l'élément fondant, ou directement, c'est ainsi qu'on peut préparer
– une solution de silicate de lithium, de sodium ou de potassium, ou bien de silicate d'ammonium quaternaire.
– une solution d'acide borique
– une solution d'aluminate de sodium ou
– une solution de phosphate de sodium ou de potassium.

Les éléments tels que le plomb, le calcium, le baryum, le magnésium, le zinc peuvent être précipités facilement soit:
– parcequ'ils sont insolubles sous forme silicate
– parcequ'ils sont faiblement solubles ou insolubles sous forme borate
– parcequ'ils sont faiblement solubles ou insolubles sous forme aluminate
– parcequ'ils sont faiblement solubles ou insolubles sous forme phosphate.

Avant précipitation, ces sels sont mis en solution généralement nitrique. D'un point de vue pratique cela suppose que notamment les silicates alcalins soient d'un rapport molaire $SiO_2$/oxyde alcalin suffisamment élevé avantageusement supérieur à deux.

Cette manière de procéder qui consiste à préparer les constituants du verre en les faisant passer par une phase soluble présente l'avantage de permettre des opérations de purification tels que, entre autres:
– la filtration ou l'ultrafiltration
– la précipitation des impuretés
– la fixation des impuretés sur support telles que les résines échangenses d'ions.

D'autre part, on remarque que les éléments formateurs du verre sont mis en oeuvre sous la même forme, qu'ils soient amenés comme silicates alcalins ou silicates métalliques, puisque le premier sert à précipiter le second. Ceci est valable pour tous les éléments. Cette propriété confère à la composition un comportement inattendu à la fusion, à l'affinage et à la phase d'homogénéisation. En effet, on observe généralement
– une fusion plus rapide et à température plus basse et constante
– un affinage également plus rapide obtenu avec une viscosité légèrement plus élevée, donc une température plus basse, et surtout sans affinant
– une phase d'homogénéisation qui n'est pas nécessaire puisque le verre obtenu est d'excellente qualité en ce qui concerne son aspect.

On peut, par ce procédé, préparer des verres à partir de matières très pures en opérant dans des conditions tout à fait nouvelles pour fondre et affiner, des matériaux utilisables dans les industries qui demandent une très grande pureté et homogénéité: par exemple les métiers de l'optique, des fibres optiques, des fibres renforçantes ou des verres spéciaux à usage électronique.

Enfin, cette nouvelle préparation du mélange vitrifiable autorise un accès à de nouveaux verres industriels. En effet, les composants élaborés par voie chimique se trouvent combinés ensemble dans un état très proche, voire identique à celui du verre final. Ils sont à l'état amorphe, et lors de la fusion il s'agit tout simplement d'une transformation vers un état transparent en phase homogène continu. Ce phénomène est clairement montré par l'analyse thermique différentielle méthode thermique qui permet de voir le processus des transformations thermiques ou chimiques.

De nouvelles caractéristiques découlent de ce phénomène. Au lieu d'assister aux réactions chimiques qui sont lentes et qui nécessitent des températures élevées pour combiner les carbonates alcalins à la silice et aux autres éléments, avec le risque d'apparition d' hétérogénéité et de voir les réfractaires se dissoudre partiellement, on voit le mélange vitrifiable fondre rapidement à une température stable , relativement basse pour donner un verre transparent rempli de bulles de diamètre régulier et assez grand pour qu'une simple élévation de température conduise à un affinage de bonne qualité sans ajout de produit spécifique à l'affinage et en un temps très court. La rapidité de la fusion et le fait de ne pas agiter pour rendre homogène le verre évitent une dégradation des matériaux réfractaires. De plus , les températures de fusion et d'affinage requises sont plus basses que celles utilisées pour obtenir des verres de même composition par le mélange traditionnel.

Ces propriétés donnent donc la possibilité de produire industriellement des compositions qui habituellement ne pouvaient être acceptées en raison des difficultés pour fondre et affiner les mélanges purement physiques, en sachant qu'il est possible de purifier jusqu'au degré souhaité les divers composants.

Pour certains verres, les risques de dévitrification sont plus faibles, puisque l'on peut amener dans un rapport molaire parfaitement défini les éléments constitutifs du verre.

Enfin, il est permis de penser que ce procédé basé sur le rapport molaire final du verre permette de maîtriser de nouvelle propriétés tant sur le produit fondu, notamment des propriétés théologiques que sur le verre final. En effet, les propriétés chimiques, physiques, mécaniques, optiques et électriques sont vraisemblablement liées à ce rapport molaire.

On ne sortirait pas non plus du carde de la présente invention en apportant dans la composition des additifs divers sous forme silicates tels que silicates ferreux, ferriques, silicate de cobalt, silicate de nickel, silicate du cuivre, ou silicate d'autres oxydes éventuellement oxyde de sélénium ou de terres rares.

De plus on a remarqué que dans le cas du mélange vitrifiable selon l'invention, on peut obtenir des billes très denses, facilitant la fusion par un malaxeur sous vide.

Par ailleurs, le comportement dans l'acide fluorhydrique d'un verre obtenu à partir d'un tel mélange met en évidence la grande homogénéité du réseau formateur: On observe en effet que l'attaque de la silice se produit de manière régulière sur l'ensemble de la surface, ce qui corroboré par un examen au microscope.

De même on note que le verre obtenu est pratiquement non attaqué par une solution d'acide nitrique à 4% à température ambiante.

Enfin, un examen optique en présence d'un liquide d'indice de réfraction égal à celui du verre permet de constater l'absence de défaut optique.

Mais la présente invention sera plus aisément comprise à l'aide des exemples suivants donnés à titre illustratif mais nullement limitatif.

Exemple 1

Dans un réacteur de 2000 cm³, on dissout dans 845 g d'eau 155 g de nitrate de plomb. Sous agitation, on ajoute goutte à goutte à 20°C, 400 g de silicate de potassium de rapport pondéral 2,3 (ou molaire 3,8) et de densité 1,27. On laisse réagir sous agitation pendant 10 minutes. La suspension est filtrée et essorée. On recueille un précipité brut à 50% d'humidité pesant environ 440 g; les eaux mères représentant 960 g.

Ensuite le précipité brut est séché à 110°C pendant 24 h; on recueille 220 g de produit brut composé de silicate de plomb et de nitrate de potassium. Les eaux mères sont reprises pour effectuer une nouvelle précipitation. A ce stade, la densité est de 1,06.

On reprend les 960 g d'eaux mères, on ajoute 40 g d'eau pour compléter à 1000 g. On y dissout 124 g de nitrate de plomb et on ajoute comme précédemment et dans les mêmes conditions 400 g de silicate de potassium. Après filtration et essorage, le précipité brut est séché et mélangé au précipité précédent et les eaux mères recyclées pour une nouvelle opération.

Après 5 recyclages, et au-delà on note une très grande stabilité dans la composition des eaux mères et du précipité brut.

Les eaux mères ont les propriétés suivantes
− Densité: 1,100
− Extrait sec: 13,5%
− Teneur en Pb++: 0,8%
− Teneur en NO₃: 8%
− Teneur en K⁺: 4,7%
Le précipité brut:
− Perte au feu: 22,0%
− Teneur en SiO₂: 34,0%
− Teneur en Pb exprimée en PbO: 27,0%
− Teneur en K exprimée en K₂O: 17,0%
Par un premier lavage à l'eau chaude, on obtient un silicate de plomb de composition moyenne:
− Perte au feu inférieure à 5%
− Teneur en SiO₂ 49%
− Teneur en Pb exprimée en PbO 44%
− Teneur en K exprimée en K₂O 1,7%
− Traces de NO₃
Par un second lavage on obtient un silicate de plomb pur de composition moyenne:
− Perte au feu 5%
− Teneur en silice 48%
− Teneur en PbO 47%

La densité apparente du produit de 0,5 la densité à l'état tassé est de 0,6 et réelle de 2,3. On observe que le produit lavé est essentiellement isotrope et amorphe à l'examen en lumière polarisée. Le silicate de plomb a bien un rapport molaire égal à 3,8 identique à celui du silicate de départ.

Exemple 2

On opère comme à l'exemple 1, sauf que l'on part de 150 g d'acétate de plomb au lieu de 155 g de nitrate de plomb.

On obtient sensiblement le même produit qu'à l'exemple 1.

Exemple 3

Dans cet exemple on part d'un silicate de sodium de rapport molaire égal à 4 et de plomb. Dans un réacteur de 2 litres dans 1000 cm³ d'eau on dissout 120 g de nitrate de sodium soit 1,41 mole et 10 g de nitrate de plomb. On obtient ainsi 1130 g de solution qui a la même composition que les eaux mères.

On ajoute dans cette solution 87 g d'acide nitrique à 63% et environ 400 g de plomb sous forme de billes. On laisse agir à froid l'acide nitrique qui met ainsi en solution 90 g, soit 0,436 mole de plomb sous forme de nitrate. Le mélange ainsi préparé se compose de
− 9,1% de nitrate de sodium
− 11,7% de nitrate de plomb
− 79,2% d'eau
Dans un réacteur de 3 litres on met les 1307 g du mélange précédent, on laisse le plomb métal dans le réacteur de 2 litres on chauffe à 80°C et on ajoute sous agitation et goutte à goutte une solution de silicate de sodium de 436 g contenant 104 g de SiO₂ soit 1,73 mole, 27 g de Na₂O soit 0,435 mole.

On refroidit à 20°C on obtient une suspension de silicate de plomb et de nitrate de sodium de composition:
− 201 g de silicate de plomb soit 0,435 mole
− 194 g de nitrate de sodium une partie à l'état insoluble, soit 2,28 moles
− 10 g de nitrate de plomb soit 0,03 mole
− 1338 g d'eau
Après filtration et essorage, on recueille, d'une part 1130 g d'eaux mères et d'autre part, 613 g de précipité.

Ce précipité est lavé à l'eau chaude, séche à l'étuve et on obtient ainsi 203 g de silicate de plomb à 97%.

Les eaux mères sont recyclées pour une nouvelle opération dans le réacteur de 2 litres après addition de:
− 90 g de plomb
− 81 g d'acide nitrique à 63%
Le produit obtenu est semblable à celui recueilli dans les exemples 1 est 2, ainsi sur l'échantillon lavé une première fois on note:
− Une perte au feu de 5,5%
− Une teneur en SiO₂ de 52,2%
− Une teneur en Pb exprimée en PbO de 40,5%

– Une teneur en Na exprimée en Na$_2$O de 1,8 %
et par un deuxième lavage on obtient un silicate
de plomb pur de
– Perte au feu = 5,5 %
– SiO$_2$ = 49 %
– PbO = 45,5 %

De plus, on réalise un test de solubilité qui
consiste à prendre 30 g d'échantillon et à les introduire dans 100 ml d'eau. On laisse reposer 12
heures sous agitation à pH = 6. On dose la teneur
en Pb dans la solution. Elle est de 280 mg/l exprimée en PbO. La faible solubilité du plomb montre
que le PbO est lié sous forme d'un composé défini
donc qu'il s'agit bien d'un produit et non d'une
juxtaposition d'oxyde de plomb et de silice.

Exemple 4

Cet exemple à pour but de mettre en évidence
les qualités et caractéristiques du produit selon
l'invention.

On prend 150 g de silicate de plomb fabriqué à
l'exemple 3.

On ajoute 240 g de silicate de potassium liquide
de rapport Rm = 3,8 et 18 g de soude caustique,
on obtient une suspension de silicates de plomb,
et de sodium. On sèche la suspension. On broie le
produit et on le tamise entre 100 et 200. Ce qui
correspond à l'état fondu à une composition en %
en poids de:
– SiO$_2$    = 56,5
– PbO    = 25,5
– K$_2$O     = 9,3
– Na$_2$O    = 8,7

On porte le produit à 900°C et on observe un
début de fusion alors que pour obtenir une telle
fusion à partir de sable et d'oxydes de plomb, il
est nécessaire de travailler à une température de
l'ordre de 1300 à 1500°C, ce qui met bien en
évidence la nature du produit selon l'invention et
son intérêt en verrerie.

Exemple 5

On prend 150 g de silicate de plomb fabriqué à
l'exemple 3 après double lavage. On ajoute 279 g
de silicate de potassium liquide de Rm = 3,8 et de
densité 1,27; puis 80,2 g de silicate de sodium
liquide de Rm = 4 et de densité 1,27 et enfin 24 g
de soude caustique. On obtient une suspension
qui après réaction de la soude sur les ions polysilicates, est un mélange très intime
– de silicate de plomb
– de silicate de potassium
– de silicate de sodium

Après séchage, broyage et tamisage, on obtient
un composé entre 100 et 200μ, qui à l'état fondu se
compose de
– 56,5 % de SiO$_2$
– 25,5 % de PbO
– 9,3 % de K$_2$O
– 8,7 % de Na$_2$O

Si on compare le produit selon l'invention et un
produit de même composition mais obtenu par
fusion à partir de sable et d'oxydes de plomb et de
carbonates de sodium et de potassium on note
que dès 900°C on observe la fusion complète alors que pour le produit de référence, il faut
attendre une température de 1300°C.

Dans un creuset en platine de 150 cm$^3$, cette
quantité de verre soit 267 g s'affine parfaitement
sans addition d'autre produit lorsque l'ensemble
est porté à 1150°C, alors que le produit de référence contient encore de la silice non dissoute à cette
température.

Enfin, le verre obtenu selon cet exemple est
moins attaqué que le verre de référence par une
solution d'acide acétiqu à 4 % à température ambiante.

Sur une éprouvette de verre constituée par une
plaque d'épaisseur égale à 1 mm et de 30 cm par 4
cm on a une perte maximale dans la solution
d'acide acétique de 0,013 % au lieu de 0,026 %,
l'équilibre étant atteint au bout de 24 h.

Exemple 6

On prend 150 g de silicate de plomb fabriqué à
l'exemple 3. On ajoute 96 g de silicate de sodium
de densité 1,27 et de même rapport molaire que le
silicate de plomb. La suspension obtenue est séchée sous vide, puis comprimée pour former un
mélange vitrifiable sous forme de pastilles de diamètre égal à 13 mm et d'épaisseur égale à 4 mm.
On obtient ainsi un solide de densité égal à 2.

Ce mélange est porté à l'état de fusion à 1460°C.
On note un bon aspect et surtout une très grande
homogénéité de verre. En effet un examen optique en présence d'un liquide de même indice de
réfraction que celui du verre révèle cette homogénéité, le morceau de verre se confond parfaitement avec le liquide sans apparition de défaut
optique.

Exemple 7

On part d'un silicate de sodium de rapport molaire égal à 4 et de plomb. Dans un réacteur de 2
litres, dans 1000 cm$^3$ d'eau on dissout 120 g de
nitrate de sodium soit 1,41 mole et 10 g de nitrate
de plomb. On obtient ainsi 1130 g de solution qui a
la même composition que les eaux mères.

On ajoute dans cette solution 87 g d'acide nitrique soit 0,87 mole à 63 % et environ 400 g de
plomb sous forme de billes. On laisse agir à froid
l'acide nitrique qui met en solution 90 g, soit 0,435
mole de plomb sous forme de nitrate. Le mélange
ainsi préparé se compose de
– 11,7 % de nitrate de plomb
– 9,1 % de nitrate de sodium
– 79,2 % d'eau

Dans un réacteur de 3 litres, on met les 1307 g
du-mélange précédent, on laisse le plomb métal
dans le réacteur de 2 litres on chauffe à 80°C et on
ajoute sous agitation et goutte à goutte une solution de silicate de sodium de 436 g contenant
104 g de SiO$_2$, soit 1,73 mole, 27 g de Na$_2$O soit
0,435 mole.

On refroidit à 20°C on obtient une suspension
de silicate de plomb et de nitrate de sodium de
composition:
– 201 g de silicate de plomb, soit 0,435 mole
– 194 g de nitrate de sodium en partie à l'état
insoluble, soit 2,28 moles

– 10 g de nitrate de plomb, soit 0,03 mole
– 1338 g d'eau

Après filtration et essorage, on recueille, d'une part 1130 g d'eaux mères et d'autre part 613 g de précipité dont la composition est:
– 201 g de silicate de plomb soit 0,435 mole
– 74 g de nitrate de sodium soit 0,870 mole
– 338 g d'eau

Ce précipité est lavé à l'eau chaude, séché à l'étuve et on obtient 207 g de silicate de plomb à 97 %

A cette composition du produit obtenu, on ajoute:
307 g de silicate de potassium liquide de rapport Rm égal à 4 et d'extrait sec égal à 35 %
176 g de silicate de sodium liquide de rapport Rm égal à 4 et d'extrait sec égal à 30 %
11 g de nitrate de sodium
15,5 g de carbonate de sodium anhydre.

On sèche et comprime cette suspension pour former un mélange vitrifiable sous forme de pastilles de diamètre égal à 13 mm et d'épaisseur égal à 4 mm. On obtient ainsi un solide de densité égale à 2.

Ce mélange est ensuite porté à l'état de fusion en 42 minutes à 1460°C et on reste 2 heures à 1280°C avant d'obtenir un verre bien homogène et très peu coloré sous forte épaisseur de composition suivante
– $SiO_2$ = 59,6 %
– PbO = 25,9 %
– $K_2O$ = 8,1 %
– $Na_2O$ = 6,4 %

A titre comparatif, on prépare un essai témoin en réalisant un mélange vitrifiable à partir de minium, de sable siliceux, de carbonate de sodium, de nitrate de soduim et de carbonate de potassium pour obtenir un verre de même composition que dans le cas précédent.

La fusion, l'affinage et la braise s'effectuent dans les mêmes conditions. Les deux verres ont les mêmes propriétés en particulier la densité est égale à 2,9564.

Exemple 8

Dans le but d'obtenir 1 kg de verre dont la composition est la suivante:
– 550 g de silice
– 300 g d'oxyde de plomb
– 150 g d'oxyde de potassium
on commence par calculer le rapport molaire

$$\frac{SiO_2}{PbO + K_2O}$$

on trouve Rm = 3,12

On prépare une solution de silicate de potassium à partir de silicate vitreux dont le rapport molaire est égal à 3,12. Cette fabrication se fait par fusion d'un mélange calculé de sable et de carbonate de potassium. La solution de silicate est soigneusement filtrée afin d'éliminer toutes impuretés métalliques. Elle est parfaitement limpide.

En partant de 550 g de sable compté pur et de 405 g carbonate de potassium, on obtient, après fusion et dissolution, 2755 g de solution contenant 550 g de silice et 276,6 g d'oxyde de potassium.

On prend d'abord 1261,3 g de cette solution pour former le silicate de plomb, en partant de 330 g d'oxyde de plomb en solution nitrique ce qui correspond à un excès de 10 % en PbO. On obtient 551,8 g de silicate de plomb sous forme solide, après élimination totale des sous produits.

Ensuite, on met en suspension ce produit dans la solution de silicate de potassium non utilisée. On ajoute ainsi 551,8 g de silicate de plomb dans 1493,7 g de solution.

Cette suspension est malaxée et séchée sous vide à la température de 100°C. On obtient une poudre dense et sèche qui a la composition vitrifiable recherchée.

Dans cet exemple, on note que la précision de la composition vitrifiable recherchée dépend de la qualité de silicate de potassium initialement préparé car on vérifie que le principe de fabrication est basé sur la substitution d'une partie de l'oxyde alcalin par l'oxyde de plomb, puisque la substitution se fait de manière stoechiométrique, l'excès de Pb restant en solution dans les eaux mères.

On prend 10 g de composition selon cet exemple. On les met dans une coupelle en platine de 50 cc environ. On relève par analyse thermique différentielle les changements d'aspect:
Jusqu'à 750°C la poudre reste blanche
A 750°C l'analyse thermique différentielle met en évidence un phénomène endothermique: la poudre se transforme totalement en une masse vitreuse transparente.

Exemple 9

Cet exemple est identique au précédent sauf que la préparation du silicate de potassium est obtenue par attaque directe du sable par une solution de potasse en présence d'un peroxyde métallique $BaO_2$, sous pression et à température élevées. Dans ce cas, on obtient une solution de silicate de potassium d'une très grande pureté, moins de 5 ppm (parties par million) de fer. Les résultats obtenus sont les mêmes, mais en plus le verre se caractérise par une très faible teneur en fer, moins de 20 ppm (parties par million), ce qui lui confère d'excellentes propriétés optiques.

Exemple 10

Dans le but d'obtenir 1 kg de verre dont la composition est la suivante:
– 720 g de silice
– 140 g d'oxyde de sodium
– 140 g d'oxyde de calcium
Le rapport molaire de ce verre est égal à 2,52.

On prépare une solution de silicate de sodium à partir de silicate vitreux dont le rapport molaire est égal à 2,52.

Cette fabrication se fait par fusion d'un mélange calculé de sable et de carbonate de sodium. La solution est soigneusement filtrée afin d'éliminer toutes impuretés métalliques. Elle est parfaitement limpide.

En partant de 720 g de sable compté pur et de 504 g de carbonate de sodium, on obtient après fusion et dissolution dans l'eau 3380 g de solution contenent 720 g de silice et 294 g d'oxyde de sodium.

On prend d'abord 1774,5 g de cette solution pour former le silicate de calcium suivant un procédé analogue en tous points à celui suivi pour le silicate de plomb.

En partant de 154 g d'oxyde de calcium sous forme nitrate, on obtient 518 g de silicate de calcium sous forme solide.

Ensuite on met en suspension ce produit dans la solution de silicate de sodium non utilisée. On ajoute ainsi 518 g de silicate de calcium dans 1605,5 g de solution.

Cette suspension est malaxée et séchée sous vide à la température de 100°C. On obtient une poudre dense et sèche, qui est la composition vitrifiable que l'on recherche.

Dans les exemples 7 à 10, la poudre est granulée et les granulés sont fondus à 1500°C pendant deux heures.

Le verre obtenu est mis dans une solution d'acide fluorhydrique à 10 % à température ambiante, pendant deux heures. On observe une attaque très régulière ce qui montre la parfaite répartition du réseau de la silice dans le verre

Exemple 11

On veut obtenir un verre de composition suivante:
– 70,0 % de $SiO_2$
– 5,0 % de CaO
– 3,0 % de MgO
– 5,0 % de BaO
– 17,0 % de $Na_2O$

On calcule le Rm de ce verre

$$Rm = \frac{SiO_2}{CaO + MgO + BaO + Na_2O} = 2,4$$

On prépare successivement à partir d'un silicate de sodium Rm = 2,4 et de densité 1,43 un silicate de calcium, de Magnésium et de baryum à partir de leur sels solubles les plus communements connus, chlorures ou nitrates ou sulfures par exemple pour le baryum. On mélange tous ces composés pour obtenir la composition désirée.

Ces exemples illustrent bien l'intérêt de la présente invention qui offre une voie tout à fait nouvelle pour la fabrication des mélanges vitrifiables, et permet de mieux contrôler la pureté et la forme de l'oxyde formateur de réseau.

Bien que les applications décrites dans les exemples précédents soient dirigées sur la verrerie, le silicate de plomb obtenu peut être utilisé seul dans d'autres applications, il peut notamment être utilisé comme produit de substitution des sels de plomb.

### Revendications

1) Procédé d'obtention d'une composition verrière à base de silicates métalliques présentant un bas point de fusion et des caractéristiques d'affinage améliorées selon lequel:

a) on forme un silicate de métal alcalin ou d'ammonium de rapport molaire $SiO_2$/oxyde de métal alcalin supérieur ou égal à 2;

b) on forme un sel soluble d'au moins un oxyde métallique MeO du groupe Pb, Ca, Ba, Zn, Mg;

c) on fait réagir le silicate de métal alcalin et le sel obtenu à l'étape b de manière à précipiter un silicate métallique d'un métal du groupe Pb, Ca, Ba, Zn, Mg;

d) on met en suspension le silicate ainsi obtenu à l'étape c dans une solution de silicate de métal alcalin;

e) in sèche;
caractérisé par le fait:
– que les rapports molaires $SiO_2$/MeO et $SiO_2$/oxyde de métal alcalin des silicates utilisés dans l'étape d sont les mêmes et la silice de la composition verrière est amenée uniquement sous forme de silicate des métaux Me et alcalins.

2) Procédé selon la revendication 1, caractérisé par le fait que l'on apporte des additifs dans la composition verrière sous forme de silicate du groupe des silicates ferreux, ferriques, de cobalt, de nickel, de cuivre, de sélénium et de terres rares.

### Patentansprüche

1. Verfahren zur Herstellung einer glasbildenden Masse auf der Basis von Metallsilicaten mit niederem Schmelzpunkt und verbesserten Läuterungseigenschaften, bei dem man

a) ein Alkalimetallsilicat oder Ammoniumsilicat mit einem Molverhältnis $SiO_2$/Alkalimetalloxid gleich oder grösser zwei herstellt,

b) ein lösliches Salz mindestens eines Metalloxids MeO aus der Gruppe Pb, Ca, Ba, Zn und Mg herstellt,

c) das Alkalisilicat und das in der Stufe b) erhaltene Salz umsetzt und ein Metallsilicat eines Metalls der Gruppe Pb, Ca, Ba, Zn und Mg ausfällt,

d) das auf diese Weise in der Stufe c) erhaltene Silicat in einer Lösung eines Alkalimetallsilicates suspendiert und

e) trocknet,
dadurch gekennzeichnet, dass die Molverhältnisse $SiO_2$/MeO und $SiO_2$/Alkalimetalloxid der in der Stufe d) verwendeten Silicate die gleichen sind und die Kieselsäure der glasbildenden Masse ausschliesslich in Form von Silicaten der Me-Metalle und Alkalimetalle zugeführt wird.

2. Verfahren nach Anspruch 1, dadurch gekennzeichnet, das man die Zusätze in die glasbildende Masse in Form von Silicaten aus der Gruppe der Eisen-(II)-silicate, Eisen-(III)-silicate, Cobaltsilicat, Nikkelsilicat, Kupfersilicat, Seleniumsilicat und Silicate von SE-Metallen einbringt.

### Claims

1. A process for producing a glassmaking composition based on metallic silicates having a low melting point and improved fining characteristics wherein

**0015794**

a) an alkali metal or ammonium silicate is formed, having a molar ratio of $SiO_2$/alkali metal oxide, which is higher than or equal to 2;

b) a soluble salt of at least one metal oxide MeO of the group Pb, Ca, Ba, Zn and Mg is formed;

c) the alkali metal silicate and the salt produced in step b) are reacted so as to precipitate a metallic silicate of a metal of the group comprising Pb, Ca, Ba, Zn and Mg;

d) the silicate produced in that way in step c) is put in suspension in a solution of alkali metal silicate; and

e) drying is effected; characterised in that:

– the molar ratios $SiO_2$/MeO and $SiO_2$/alkali metal oxide of the silicates used in step d) are the same and the silica of the glassmaking composition is supplied solely in the form of silicate of the metals Me and alkali metals.

2. A process according to claim 1 characterised in that additives are added to the glassmaking composition in the form of silicate of the group comprising ferrous, ferric, cobalt, nickel, copper, selenium and rare earth silicates.